# FASCICULE DE BREVET EUROPEEN

(11) **EP 0 718 960 B1**
(45) Date de publication et mention de la délivrance du brevet: **29.01.1997**
(21) Numéro de dépôt: 94810717.2
(22) Date de dépôt: 12.12.1994
(51) Int. Cl.: H02K 37/12, H02K 37/22

(54) **Moteur pas à pas multipolaire polyphasé**
Mehrphasiger vielpoliger Schnittmotor
Multiphase multipolar stepping motor

(43) Date de publication de la demande: 26.06.1996
(73) Titulaire: DETRA SA, CH-2504 Bienne (CH)
(72) Inventeur: Tu, Mai Xuan, CH-1024 Ecublens (CH); Schwab, Michel, CH-2502 Bienne (CH)
(74) Mandataire: Fischer, Franz Josef

(56) Documents cités:
- WO-A-82/00929
- WO-A-85/00704
- WO-A-92/11686
- FR-A- 2 361 014
- FR-A- 2 406 907
- PATENT ABSTRACTS OF JAPAN vol. 8, no. 213 (E-269) (1650) 28 Septembre 1984 & JP-A-59 096 862 (TOKYO DENKI) 4 Juin 1984
- PATENT ABSTRACTS OF JAPAN vol. 16, no. 48 (E-1163) 6 Février 1992 & JP-A-03 251 071 (OLYMPUS OPTICAL) 8 Novembre 1991

## Description

La présente invention a pour objet un moteur pas à pas multipolaire polyphasé comportant un rotor en forme de disque possédant N paires de pôles répartis autour d'un axe central et aimanté dans une direction parallèle à cet axe et un circuit magnétique statorique comportant plusieurs phases.

Des moteurs pas à pas polyphasés de ce type sont connus.

Dans le brevet FR-A-2 361 014, il est décrit un moteur pas à pas monophasé multipolaire possédant un rotor en forme de disque. Ce moteur possède une bobine en forme de galette placée en dessous du rotor et des pièces polaires statoriques. Ce mode de réalisation présente l'inconvénient d'une grande perte en hauteur à cause de l'empilement des divers éléments constituant le moteur; de plus, le moteur étant de type monophasé, il ne possède qu'un seul sens de rotation préférentiel.

Dans le fascicule de brevet CH 653 189, il est décrit un moteur polyphasé multipolaire possédant un rotor en forme de disque. Chaque phase de ce moteur est constituée par deux parties en forme de U (12', 12") disposées en regard l'une de l'autre et couplées avec une bobine de phase (13', 13")...

Une telle disposition peut convenir pour un moteur de grande dimension; pour les moteurs de faible encombrement, cet arrangement conduit à une perte en hauteur et une augmentation importante de la longueur moyenne de la bobine. De plus, le coût de fabrication d'un tel moteur est élevé étant donné le nombre de pièces détachées à assembler avec précision.

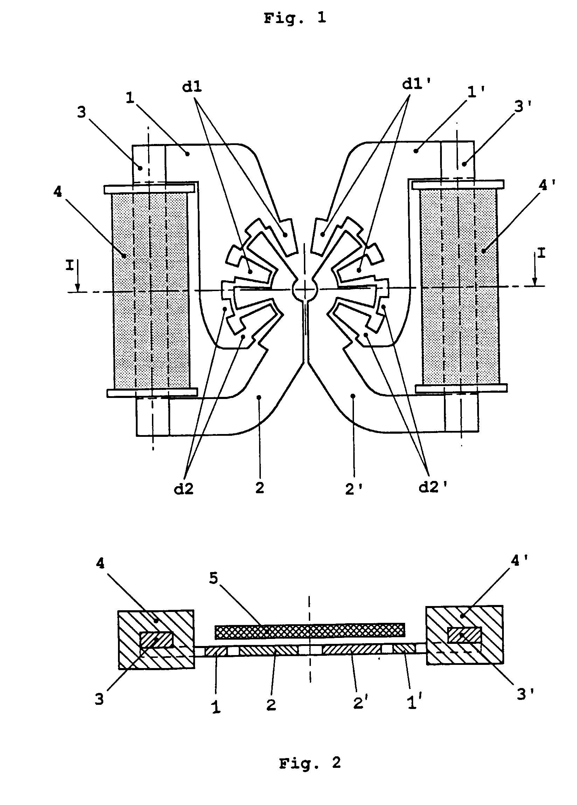

Dans le brevet US-4 634 906, il est décrit un moteur polyphasé multipolaire possédant un aimant en forme de disque et un ensemble de circuits magnétiques statoriques disposés dans un même plan. Chaque phase du circuit magnétique statorique est constituée par deux pièces polaires enchevêtrées. Suivant la phase considérée, la denture du stator occupe un pôle entier (p1 et p4 de la figure 2) ou une fraction de pôle (p5 et p9 de la figure 2). Cette construction conduit inévitablement à une pièce polaire mécaniquement très faible (section réduite au niveau du pôle p5 de la figure 2) surtout lorsque le nombre de pôles du moteur est élevé.

Dans le brevet CH-683 810 A5, il est décrit un moteur polyphasé multipolaire possédant un aimant en forme de disque et un circuit magnétique statorique constitué par deux pièces polaires principales (4a, 5a; 4b, 5b) connectées chacune à une extrémité d'un noyau de bobine (1a, 1b) et une pièce polaire intermédiaire (6a; 6b) se trouvant dans le même plan. Cette disposition permet de résoudre le problème de la faible section rencontré dans le moteur du brevet US-4 634 906; par contre, elle présente l'inconvénient d'un facteur de couplage réduit entre l'aimant et la bobine de chaque phase. En effet, dans cette disposition, le flux créé par la bobine statorique doit traverser deux entrefers consécutifs, soit l'entrefer entre la première pièce polaire principale et la pièce polaire intermédiaire et la deuxième pièce polaire principale.

Un autre inconvénient majeur commun aux trois moteurs précités est l'absence d'un couple de maintien lorsque les bobines de phase ne sont pas alimentées. Pour certaines applications, comme par exemple l'entraînement de l'aiguille d'un instrument de mesure à affichage analogique, cette absence de couple de maintien nécessite l'alimentation permanente des bobines de phase, ce qui conduit à une consommation d'énergie excessive de l'instrument.

Le but de la présente invention est de proposer un moteur multipolaire et polyphasé de dimensions réduites, de construction simple, avec un rendement énergétique élevé grâce à l'amélioration du facteur de couplage entre l'aimant et la bobine de phase et grâce au couple de maintien en l'absence de courant dans les bobines.

Afin d'atteindre ce but, il est proposé un moteur pas à pas multipolaire polyphasé selon les revendications 1 à 5.

L'invention sera décrite ci-après avec, à titre d'exemples, plusieurs formes possibles d'exécutions du moteur selon l'invention, en se référant aux dessins annexés dans lesquels:
- La figure 1 représente la vue en plan de dessus du circuit magnétique d'une première forme d'exécution du moteur.
- La figure 2 représente la vue en coupe du circuit de la figure 1 selon l'axe I-I de cette dernière.
- La figure 3 représente la vue en plan schématique de l'aimant de rotor.

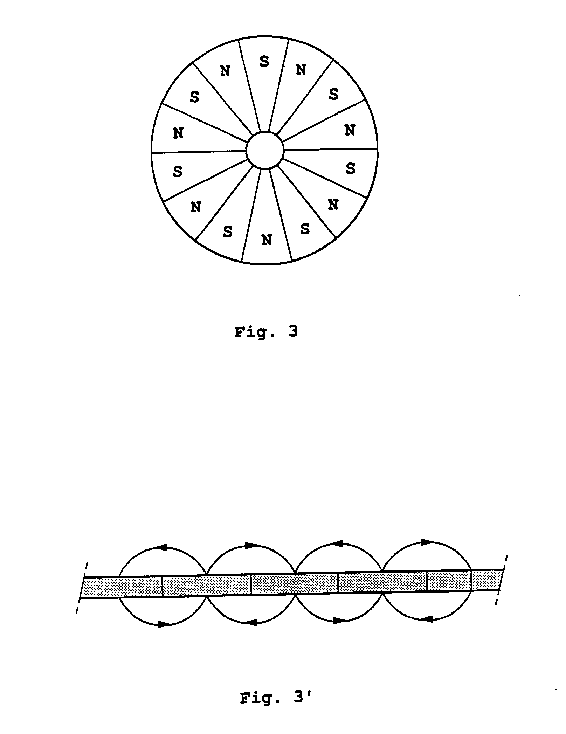

- La figure 3' représente schématiquement les lignes de champ magnétique créées par l'aimant de la figure 3.

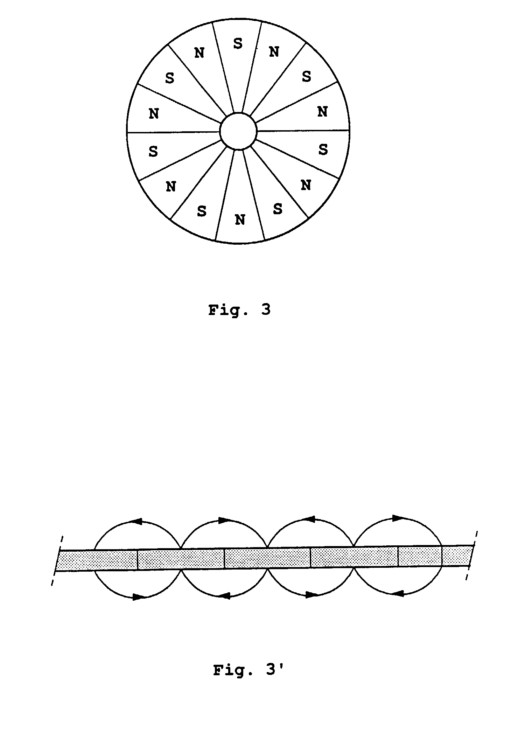

- La figure 4 représente la vue en plan de dessus du circuit magnétique d'une deuxième forme d'exécution du moteur.

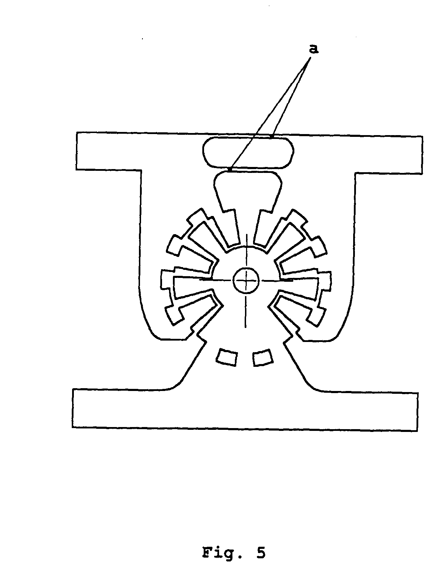

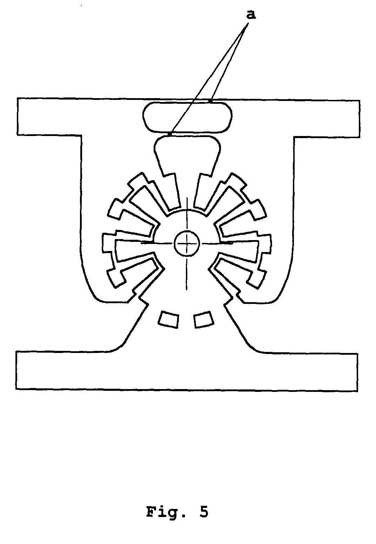

- La figure 5 représente une troisième forme d'exécution du moteur.

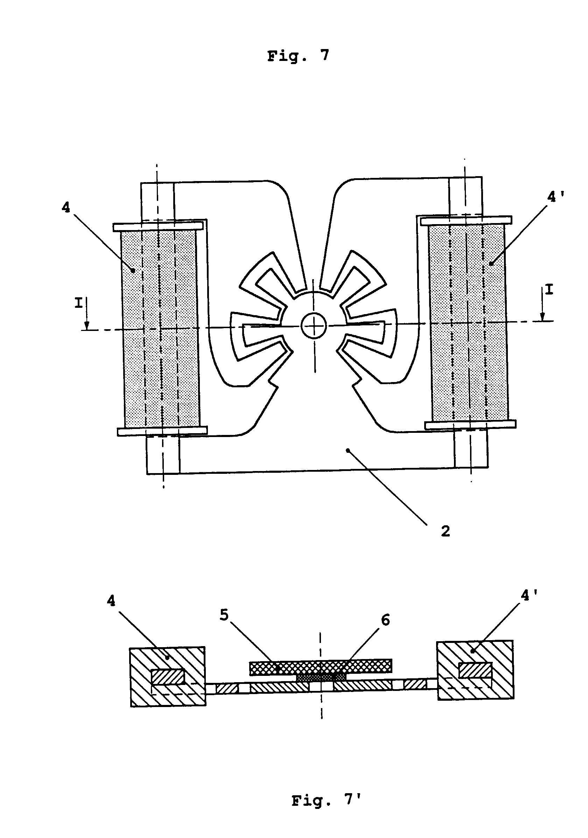

- La figure 6 représente une quatrième forme d'exécution du moteur.
- Les figures 7 et 7' représentent une cinquième variante d'exécution du moteur.

La figure 1 représente la vue en plan de dessus du circuit magnétique d'une première forme d'exécution du moteur. Dans cet exemple, le moteur possède 7 paires de pôles et 2 phases. Le circuit magnétique de chaque phase est constitué par une pièce polaire extérieure (1, 1'), une pièce polaire intérieure (2, 2'); les 2 pièces polaires sont disposées dans un même plan_{,} parallèle à celui du rotor 5 comme l'illustre la figure 2. Les 2 pièces polaires de chaque phase sont connectées chacune à une extrémité d'un noyau de bobine (3, 3') portant une bobine (4, 4'). La pièce polaire intérieure (2, 2') possède une denture avec un pas dentaire égal à 2π/7. La pièce polaire extérieure (1, 1') possède 2 zones dentées distinctes. La première zone dentée (d1, d1') située à l'intérieur possède un pas dentaire de 2π/7; les dents de la première zone du stator extérieur sont enchevêtrées avec celles du stator intérieur. Cette structure crée, sous l'effet du courant dans les enroulements de phase, une répartition d'induction statorique de même période que celle créée par l'aimant du rotor et, de ce fait, un couple d'interaction avec l'aimant du rotor. La deuxième zone dentée du stator extérieur, située à l'extérieur de la première zone, possède un pas dentaire de 2π/14. Cette deuxième zone dentée crée, par interaction avec l'induction du rotor et sous l'effet de la variation de perméance, un couple de maintien avec une période 2 fois plus petite que celle du couple créé par le courant dans la première zone. On remarque que les structures dentées des deux zones sont décalées l'une par rapport à l'autre, ceci dans le but d'obtenir un couple de démarrage favorable.

La figure 3 représente la vue en plan schématique de l'aimant du rotor avec 7 paires de pâles (N, S) répartis autour d'un axe central perpendiculaire au plan du dessin.

La répartition des lignes de champ magnétique de l'aimant est illustrée schématiquement par la figure 3'.

La figure 4 représente la vue en plan schématique du circuit magnétique d'une deuxième forme d'exécution du moteur. Dans cet exemple d'exécution, les 2 pièces polaires intérieures du moteur forment un ensemble unique permettant ainsi, d'une part de renforcer mécaniquement ces pièces et d'autre part de faciliter le montage de ces pièces. De plus, dans la pièce polaire intérieure unique, on peut créer une zone dentée d3 qui contribue au couple de maintien total.

Dans le même but de faciliter le montage du moteur, une troisième forme d'exécution du moteur est représentée à la figure 5. Dans cette forme d'exécution, les 2 pièces polaires extérieures du stator sont reliées entre elles par des attaches (a) de section réduite pour former mécaniquement un ensemble unique. Cet ensemble, obtenu facilement par étampage, facilite le montage des pièces polaires. Les attaches (a), de par leur section réduite, n'ont qu'un rôle purement mécanique et ne modifient pas le fonctionnement du moteur.

La figure 6 représente une variante d'exécution du moteur dans laquelle les noyaux de bobine forment un ensemble unique avec les pièces polaires extérieures. Dans cette variante d'exécution, pour permettre la superposition des noyaux de bobine sur la pièce polaire intérieure, cette dernière est pliée aux niveaux p1 et p2.

Dans certaines applications, il est nécessaire de faire fonctionner le moteur à une fréquence élevée. Dans cette optique, la réduction du diamètre du rotor pour diminuer son inertie est primordiale. La création du couple de maintien par une deuxième zone dentée conduit à une augmentation du diamètre du rotor pour couvrir cette zone, ce qui ne convient plus pour de telles applications.

Les figures 7 et 7' représentent une variante d'exécution du moteur avec un rotor à diamètre réduit. Dans ce cas, le couple de maintien du rotor est obtenu par frottement entre le rotor et son assise sous l'effet de la force d'attraction magnétique entre l'aimant du rotor et le circuit magnétique statorique au lieu du système à double denture de la pièce statorique externe des formes d'exécution précédentes.

Comme la force d'attraction magnétique a une valeur réduite, un système classique de pivotement ne permet pas d'obtenir un couple de maintien suffisant pour garantir la position du rotor en l'absence de courant et sous l'effet de chocs angulaires externes que peut subir un instrument de mesure. Dans ce cas, il est nécessaire d'augmenter sensiblementle rayon de frottement pour obtenir la valeur désirée. La pratique montre que le rotor doit pouvoir supporter des chocs angulaires supérieurs ou égaux à 5000 rad/S² pour garantir la précision de l'instrument. Dans ces conditions, le rayon de frottement entre le rotor et son assise doit être suffisamment grand pour créer un couple de frottement supérieur au couple d'accélération angulaire exprimé par:
- Cacc =: J · dω/dt
- cacc =: couple d'accélération angulaire
- J =: moment d'inertie du rotor
- dω/dt =: accélération angulaire = 5000 [rad/S²]
La création du couple de maintien par le frottement conduit bien entendu à une légère diminution du rendement du moteur; par contre le moteur peut fonctionner à une fréquence plus élevée grâce à la diminution de l'inertie du rotor et à l'augmentation de la stabilité dynamique apportée par l'augmentation du frottement. En outre, grâce à la grande surface de frottement, la pression spécifique au contact est réduite et l'expérience sur ce type de moteur montre que le problème de l'usure est quasiment inexistant. La figure 7' représente le rotor (5), la surface de contact (6), la pièce polaire intérieure (2) et les bobines (4, 4').

## Revendications

1. Moteur pas à pas multipolaire polyphasé comportant un rotor (5) à aimantation permanente avec N paires de pôles répartis autour d'un axe central et aimanté dans une direction parallèle à cet axe, un circuit magnétique statorique (1,1'2,2',3,3') comportant plusieurs phases, chacune de ces dites phases étant formée d'une pièce polaire extérieure (1,1') et d'une pièce polaire intérieure (2,2') s'étendant dans un même plan perpendiculaire audit axe central et connectées chacune à une extrémité d'un noyau de bobine (3,3') portant une bobine (4,4'), caractérisé en ce que la dite pièce polaire extérieure (1,1') comporte une première zone dentée (d1,d1') dont le pas dentaire est sensiblement égal à 2π/N et une deuxième zone dentée (d2,d2') extérieure à la première zone dont le pas dentaire est sensiblement égal 2π/2N, ce que ladite pièce polaire intérieure (2,2') comporte une zone dentée dont le pas dentaire est sensiblement égal à 2π/N et en ce que la zone dentée de la pièce polaire intérieure est enchevêtrée avec la première zone dentée (d1,d1') de la pièce polaire extérieure.

2. Moteur pas à pas selon la revendication 1, caractérisé en ce que ledit rotor (5) comporte une surface de frottement (6) parallèle au plan des pièces polaires statoriques (1,1'2,2') et en ce que le rayon de frottement est suffisamment grand pour que sous l'effet de la force d'attraction magnétique entre l'aimant du rotor et les pièces polaires statoriques, le couple de frottement résultant est supérieur ou égal à 5000 J, J étant l'inertie du rotor.

3. Moteur pas à pas selon la revendication 1 ou selon la revendication 2, caractérisé en ce que les pièces polaires intérieures (2,2') des différentes phases sont reliées magnétiquement entre elles pour former un ensemble unique.

4. Moteur pas à pas selon une des revendications 1 à 3, caractérisé en ce que les pièces polaires extérieures (1,1') des différentes phases sont reliées entre elles par des attaches (a) de section sensiblement plus faible que celle des noyaux de bobine.

5. Moteur pas à pas selon une des revendications 1 à 4, caractérisé en ce que la pièce polaire extérieure et le noyau de bobine de chaque phase constituent un ensemble unique.

## Claims

1. Polyphase multipolar stepping motor comprising a rotor (5) having permanent magnetization with N pairs of poles distributed about a central axis and magnetized in a direction parallel to that axis, a magnetic stator circuit (1, 1', 2, 2', 3, 3') comprising several phases, each of said phases being formed of an outer pole piece (1, 1') and an inner pole piece (2, 2') extending in a single plane perpendicular to said central axis and each connected to one end of a coil core (3, 3') bearing a coil (4, 4'), characterized in that said outer pole piece (1, 1') comprises a first toothed zone (d1, d1'), the tooth pitch of which is approximately equal to 2π/N and a second toothed zone (d2, d2') outside of the first zone, the tooth pitch of which is approximately equal to 2π/2N, in that said inner pole piece (2, 2') comprises a toothed zone, the tooth pitch of which is approximately equal to 2π/N, and in that the toothed zone of the inner pole piece is interpenetrated by the first toothed zone (d1, d1') of the outer pole piece.

2. Stepping motor according to claim 1, characterized in that the said rotor (5) comprises a friction surface (6) parallel to the plane of the stator pole pieces (1, 1', 2, 2'), and in that the radius of friction is great enough so that under the influence of the magnetic attraction force between the magnet of the rotor and the stator pole pieces, the resultant frictional torque is equal to or greater than 5000 J, J being the inertia of the rotor.

3. Stepping motor according to claim 1 or according to claim 2, characterized in that the inner pole pieces (2, 2') of the different phases are magnetically interconnected to form a single whole.

4. Stepping motor according to one of the claims 1 to 3, characterized in that the outer pole pieces (1, 1') of the different phases are interconnected by means of ties (a) having an appreciably smaller cross-section than that of the coil cores.

5. Stepping motor according to one of the claims 1 to 4, characterized in that the outer pole piece and the coil core of each phase constitute a single whole.

## Patentansprüche

1. Mehrphasiger vielpoliger Schrittmotor mit einem Rotor (5) mit Permanentmagneten mit N Polpaaren, die um eine zentrale Achse verteilt und in einer Richtung magnetisiert sind, die parallel zu dieser Achse ist, mit einem Statormagnetkreis (1, 1', 2, 2', 3, 3') mit mehreren Phasen, wobei jede dieser genannten Phasen durch einen äusseren Polschuh (1, 1') und einen inneren Polschuh (2, 2') gebildet ist, die sich in einer gleichen Ebene ausbreiten, die zur genannten zentralen Achse senkrecht steht, und jeder mit einem Ende eines Spulenkerns (3, 3'), welcher eine Spule (4, 4') trägt, verbunden ist, dadurch gekennzeichnet, dass der genannte äussere Polschuh (1, 1') eine erste gezahnte Zone (d1, d1'), deren Zahnteilung im wesentlichen gleich 2π/N ist und eine zweite gezahnte Zone (d2, d2') umfasst, die ausserhalb der ersten Zone ist und deren Zahnteilung im wesentlichen gleich 2π/2N ist, dass der genannte innere Polschuh (2, 2') eine gezahnte Zone umfasst, deren Zahnteilung im wesentlichen gleich 2π/N ist, und dass die gezahnte Zone des inneren Polschuhs mit der ersten gezahnten Zone (d1, d1') des äusseren Polschuhs durchsetzt ist.

2. Schrittmotor nach Anspruch 1, dadurch gekennzeichnet, dass der genannte Rotor (5) eine Reiboberfläche (6) aufweist, welche parallel zur Ebene der Statorpolschuhe (1, 1', 2, 2') ausgerichtet ist, und dass die Reibung gross genug ist, so dass unter dem Einfluss der magnetischen Anziehungskraft zwischen dem Rotormagneten und den Statorpolschuhen das resultierende Reibmoment grösser oder gleich 5000 J ist, wobei J das Trägheitsmoment des Rotors ist.

3. Schrittmotor nach einem der Ansprüche 1 oder 2, dadurch gekennzeichnet, dass die inneren Polschuhe (2, 2') unterschiedlicher Phasen magnetisch miteinander verbunden sind zur Bildung einer Einheit.

4. Schrittmotor nach einem der Ansprüche 1 bis 3, dadurch gekennzeichnet, dass die äusseren Polschuhe (1, 1') unterschiedlicher Phasen miteinander verbunden sind durch Verbindungsstücke (a) mit einem Querschnitt, der wesentlich kleiner ist, als derjenige des Spulenkerns.

5. Schrittmotor nach einem der Ansprüche 1 bis 4, dadurch gekennzeichnet, dass der äussere Polschuh und der Spulenkern jeder Phase eine Einheit bilden.
